# EUROPEAN PATENT APPLICATION

(11) **EP 2 405 145 A2**
(43) Date of publication of application: **11.01.2012**
(21) Application number: 11171272.5
(22) Date of filing: 24.06.2011
(51) Int. Cl.: F15B 19/00

(54) **Method for Monitoring a Component in a Hydraulic Circuit, Monitoring Device and Fluid Turbine**

(30) Priority: 29.06.2010 US 825688
(71) Applicant: General Electric Company, Schenectady, NY 12345 (US)
(72) Inventor: Nies, Jacob Johannes, 8042 HA Zwolle (NL)
(74) Representative: Bedford, Grant Richard

(57) **Abstract**

The disclosure concerns a method for monitoring at least one component to be monitored in a hydraulic circuit (200) filled with a working fluid, the hydraulic circuit comprises at least one pump (210, 410, 420, 600, 700) for circulating the working fluid, wherein the method comprises:- changing an operational state of at least one first component (210, 215, 220, 230, 250, 260, 290, 300, 410, 420, 220, 510, 520, 600, 700) in the hydraulic circuit such that a working point of the at least one component to be monitored changes to a predetermined working point; - performing at least one measurement for monitoring the at least one component to be monitored. Further, the disclosure concerns a fluid turbine (100) comprising at least one fluid rotor (160, 415, 425), wherein the fluid rotor is adapted to convert kinetic power of a fluid into a rotation, the fluid turbine further comprising a hydraulic circuit (200) filled with a working fluid.

## Description

The present disclosure relates generally to a method for monitoring at least one component in a hydraulic circuit. Further, the present disclosure relates to a monitoring device that is provided for monitoring at least one component in a hydraulic circuit. According to another aspect, the present disclosure relates to a fluid turbine comprising at least one fluid rotor.

Wind turbines may include a mechanical gear box between the wind rotor and the generator of the wind turbine. In further embodiments, a hydraulic transmission between the wind rotor and the generator may be used. In such wind turbines which have a hydraulic transmission between the rotation of the wind rotor and the rotor of the generator there is a transmission ratio which may be arbitrarily chosen. Typically, in traditional hydraulic equipment, the flow rate is controlled but often not quantified in the control system. For example, the volumetric performance of a pump or leakages are difficult to detect in systems not supervised by humans. Further, it may be difficult to detect whether a component in the hydraulic circuit of a wind turbine is properly working. For example, a component in the hydraulic circuit may have a leakage. In conventional hydraulic systems it is hard to measure, for example, the exact swash plate position in a radial piston hydraulic motor as the position is not necessarily measured in the first place and in the event it is measured it is not cheap to get the accuracy required.

Typically, condition monitoring may be used for decreasing maintenance costs of machines. For example, in an embodiment, a system may monitor and control closed circuit hydrostatic transmissions in operating conditions. For example, volumetric losses may increase due to wear of hydrostatic transmissions. Typically, a volumetric loss may provide information about a technical worthiness. In an embodiment, the volumetric loss may depend on operating parameters, in particular on a high pressure oil, pump shaft speed and oil viscosity.

In view of the above, a method for monitoring at least one component to be monitored in a hydraulic circuit filled with a working fluid is provided, the hydraulic circuit includes at least one pump for circulating the working fluid, wherein the method includes: changing an operational state of at least one first component in the hydraulic circuit, so that a working point of the at least one component to be monitored changes to a predetermined working point; performing at least one measurement for monitoring the at least one component to be monitored.

According to a further aspect of the present invention, a monitoring device is provided for monitoring at least one component to be monitored in a hydraulic circuit being filled with a working fluid, wherein the hydraulic circuit includes at least one pump for circulating the working fluid, wherein the monitoring device is adapted to be connected to the at least one first component for changing the operational state of the at least one first component in the hydraulic circuit, so that a working point of the at least one component to be monitored changes to a predetermined working point, and the monitoring device is adapted to be connected to at least one measurement device for performing a measurement for monitoring the at least one component to be monitored.

According to another aspect, a fluid turbine comprising at least one fluid rotor, wherein the fluid rotor is adapted to convert the kinetic power of a fluid into a rotation, the fluid turbine further comprising a hydraulic circuit filled with a working fluid, wherein the hydraulic circuit includes at least one pump, wherein the at least one pump has a pump rotor, wherein the fluid rotor is in operative connection with the pump rotor of the at least one pump for a rotational transmission, the hydraulic circuit further comprising at least one hydraulic motor for driving at least one generator shaft of at least one generator for converting a rotation into electrical power, wherein the fluid turbine further includes a monitoring device for at least one component to be monitored in the hydraulic circuit, wherein the monitoring device is connected to at least one first component of the hydraulic circuit for changing the operational state of the at least one first component, so that a working point of the at least one component to be monitored changes to a predetermined working point, and a measurement device connected to the monitoring device for performing a measurement for monitoring the at least one component to be monitored.

Various aspects, advantages and features of the present invention are apparent from the dependent claims, the description and the accompanying drawings, in which:
Fig. 1 shows an embodiment of a wind turbine;
Fig. 2 shows an embodiment of a hydraulic circuit;
Fig. 3 shows a further embodiment of a hydraulic circuit;
Fig. 4 shows another embodiment of a hydraulic circuit;
Fig. 5 shows an embodiment of a pump;
Fig. 6 shows another embodiment of a pump; and
Fig. 7 shows a flowchart of an embodiment of a method.

Reference will now be made in detail to the various embodiments, one or more examples of which are illustrated in each figure. Each example is provided by way of explanation and is not meant as a limitation. For example, features illustrated or described as part of one embodiment can be used on or in conjunction with other embodiments to yield yet further embodiments. It is intended that the present disclosure includes such modifications and variations.

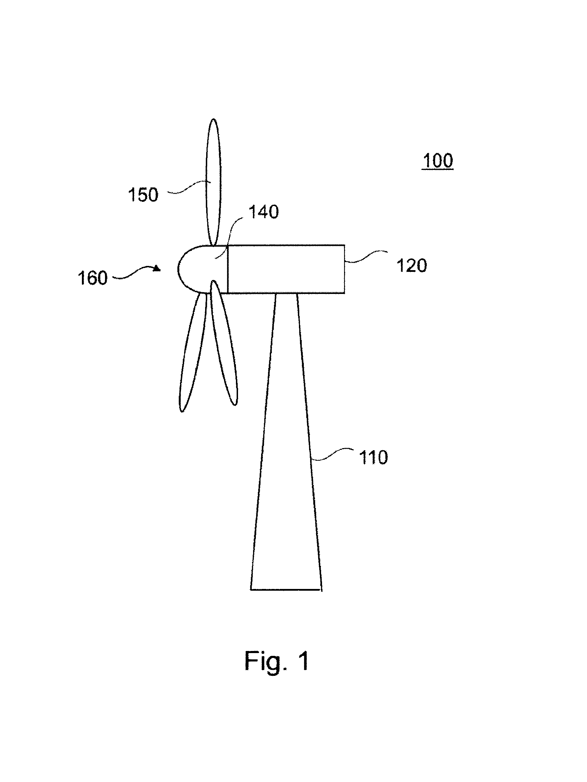

Fig. 1 shows a wind turbine 100. The wind turbine 100 includes a tower 110 on which a nacelle 120 is mounted. The nacelle 120 is rotatable about a vertical axis of the tower 110. Within the nacelle 120 a generator (not shown) for transforming rotational power into electrical power is placed. The generator is connected to a hub 130 that is rotatable about a horizontal axis. Three rotor blades 140 are connected to the hub 130. The rotor blades 140 and the hub 130 together form a wind rotor of the wind turbine 100. The wind turbine 100 operates as follows. In a typical situation, the nacelle 120 is rotated about the vertical axis such that the horizontal axis of the hub 130 is approximately parallel to a wind direction. Typically, the wind has a certain amount of power in the wind rotor plane. This power exits in an amount of airflow or mass-flow that has a given speed. This power creates a first torque and a first rotational speed on the wind rotor due to an aerodynamical profile of the rotor blades 140.

Accordingly, the wind rotor rotates about its horizontal axis, thus driving the generator. The generator transforms the mechanical rotation into electric power. Hence, the kinetic energy of the wind is transformed into electric energy.

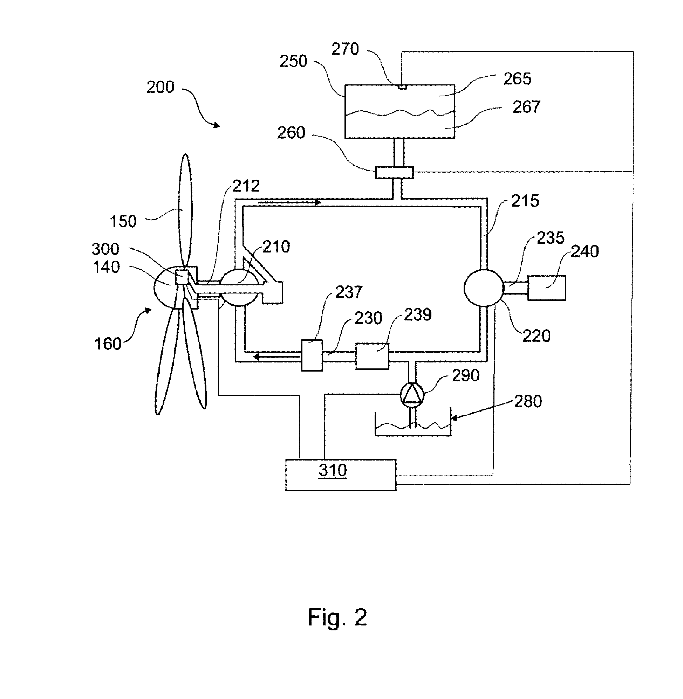

Fig. 2 shows a schematic embodiment of a hydraulic circuit 200 of the wind turbine 100. The hydraulic circuit shown in Fig. 2 includes a pump 210 which is driven by a shaft 212 of the wind rotor 160 of the wind turbine. Thus, the rotational power of the rotating wind rotor is converted into the kinetic power of the hydraulic or working fluid in the hydraulic circuit. The hydraulic circuit further includes a hydraulic motor 220 which reconverts the kinetic power in the hydraulic fluid into rotational power. The direction in which the hydraulic fluid flows is indicated with the arrows in Fig. 2. The hydraulic motor transports the hydraulic fluid from its upstream side in a high pressure line 215 to its downstream side. Then, it flows in a low pressure line 230 from the downstream side of the hydraulic motor 240 to the upstream side of the hydraulic pump 210 which again pumps hydraulic fluid from its upstream side at the low pressure hydraulic line 230 to the high pressure hydraulic line 215 on the downstream side of the hydraulic pump 210. The hydraulic motor 220 is connected by a generator shaft 235 to a generator 240 such that the rotational power produced by the hydraulic motor 220 is converted into electrical power by the generator 240.

In a typical embodiment, which may be combined with other embodiments disclosed herein, a hydraulic accumulator 250 to the high pressure line 215 between the downstream side of the hydraulic pump 210 and the upstream side of the hydraulic motor 220. In an embodiment, a valve 260 may regulated to flow between the hydraulic accumulator and the high pressure line 215. For example, the behavior hydraulic circuit is much stiffer when the valve 260 is closed compared to the behavior, when the valve 260 is closed. In a typical embodiment, the hydraulic accumulator 250 may be a reservoir which is partly filled with a compressible gas 265. The other part of the reservoir is filled with the hydraulic fluid 267. The gas is in an embodiment, which may be combined with other embodiments, nitrogen. The pressure of the gas in the accumulator 250 may, in a typical embodiment, be measured by a pressure sensor 270. For example, in the event of a gust of wind, the hydraulic pump rotates faster for a short time. In such an event, the (optional) valve 260 may be opened, and the additional energy of the gust of a wind may be temporarily stored in the accumulator 250. In the event that the wind force driving the wind rotor of the wind turbine 100 is reduced the accumulator 250 may release the stored energy. Furthermore, the accumulator may be used for evening out pressure-peaks. In other embodiments, other devices for storing the kinetic energy of the hydraulic fluid may be used. For example, a spring may be used for storing the energy of the gust of the wind.

The hydraulic circuit 200 may, in an embodiment, which may be combined with other embodiments herein, include a reservoir 280 and a reservoir pump 290 for pumping hydraulic fluid from the reservoir 280 into the low pressure line of the hydraulic circuit 200.

In a further embodiment, the hydraulic circuit may include a cooler 237 and/or a filter 239 for filtering the hydraulic fluid. The cooler may include a fan which may be activated with a specific speed to cool the hydraulic fluid. For example, the viscosity of the hydraulic fluid may change with the temperature of the hydraulic fluid. Typically, if the fan is provided with high power, the hydraulic fluid is stronger cooled. In the filter 239 a number of filter modules may be activated or deactivated to amend the friction in the hydraulic circuit. For example, the filter may include a pass-by that may be activated to reduce the friction.

In a typical embodiment, which may be combined with other embodiments disclosed herein, the pressure in the hydraulic circuit may be used for driving a blade pitch system 300 for the rotor blades 140. In an embodiment, a control device or monitoring device 310 is adapted to control the pump 210 for converting rotational power into kinetic power of the hydraulic fluid, the hydraulic motor 220, the pressure sensor 270, the reservoir pump 290, and the blade pitch system 300.

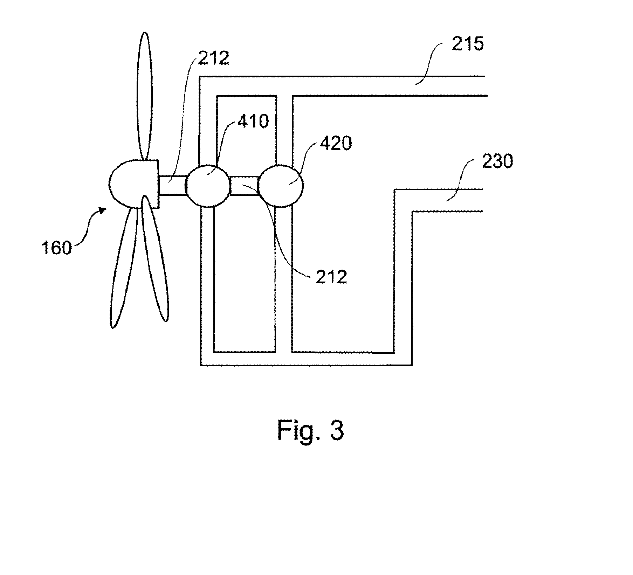

Fig. 3 shows a further embodiment of a part of a hydraulic circuit 400. The wind rotor 160 drives the shaft 212. The shaft 212 drives a first pump 410 and a second pump 420 that are connected in parallel in the hydraulic circuit. In a further embodiment, more than two pumps may be driven by the shaft 212. Typically, a volumetric control may be applied inside each pump, i.e. the pump may be adapted to deliver a changeable volume of hydraulic fluid, when the pump rotor is driven with a constant speed.

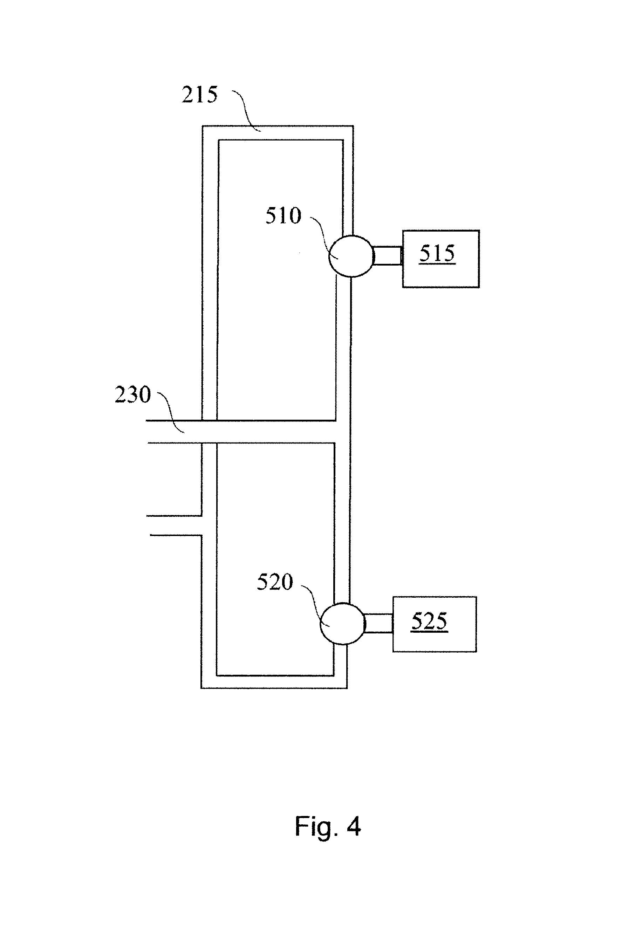

Fig. 4 shows another embodiment of a hydraulic circuit 500, which may be combined with other embodiments disclosed herein, the hydraulic circuit 500 includes a first hydraulic motor 510 for converting the kinetic power of the hydraulic fluid in the hydraulic circuit 500 into rotational power for driving a first generator 515 for producing electric current. The hydraulic circuit 500 includes a further hydraulic motor 520 for converting the kinetic power of the hydraulic fluid in the hydraulic circuit into rotational power for driving a second generator 525 which converts the rotational power into electrical power. The first hydraulic motor 510 and the second hydraulic motor 520 are connected, as shown in Fig. 4, in parallel. In another embodiment, two hydraulic motors may be disposed on the same generator rotor axis, as shown for the pumps in Fig. 3. Typically, a volumetric control may be applied inside each hydraulic motor.

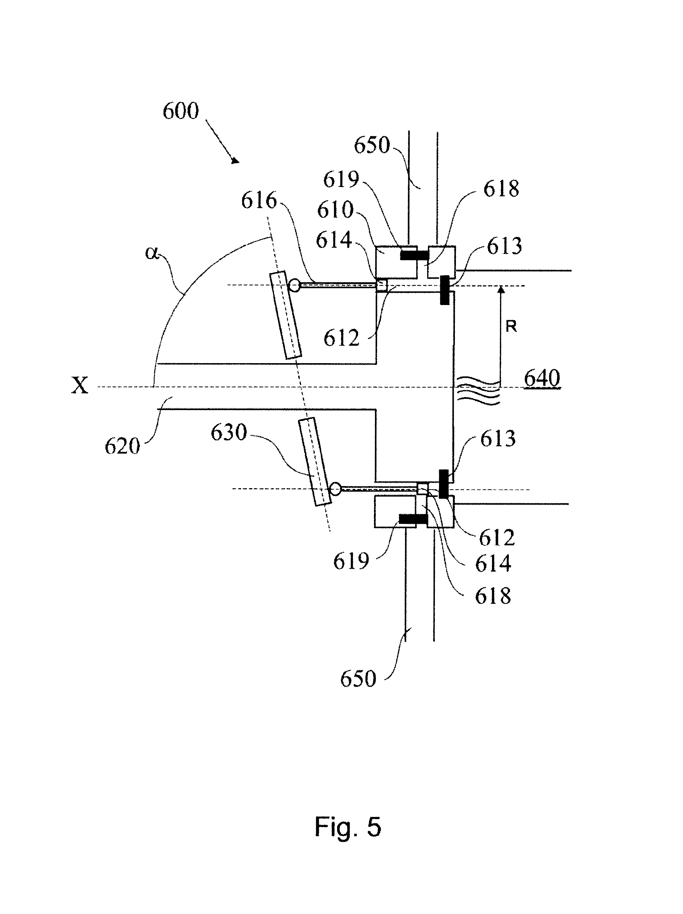

Fig. 5 shows an embodiment of a hydraulic pump which may be used for converting rotational power into the kinetic power of a hydraulic fluid. The Fig. 5 shows a typical embodiment of an axial piston pump 600 with a rotating barrel 610. The rotating barrel is fixed to a shaft 620. In a typical embodiment, which may be combined with other embodiments disclosed herein, the shaft 620 is an operative connection to a wind rotor of a wind turbine. In another embodiment, the shaft 620 may be connected to a rotor of a hydraulic turbine. The shaft 620 and therefore the barrel 610 are rotating about a rotation axis X. In a typical embodiment, which may be combined with other embodiments disclosed herein, the shaft 620 and the barrel 610 form together a rotor of the axial piston pump. The barrel 610 includes at least two axial bores 612 parallel to the axial direction X, wherein the bores having a first end and a second end. The axial bores 612 are arranged outside the axis X. In each bore a piston 614 is disposed. In the direction of the first end of the axial bore 612, a first end of a connecting rod 616 is connected to the piston 614. A second end of the connecting rod 616 is connected to a non-rotating swash plate 630. The swash plate is inclined with respect to the rotation axis with a first angle α. Thus, when the barrel is rotating about the rotation axis X, the piston 614 is moved back and forward in the axial bore 612.

Dependent on the first angle α, the stroke of the piston may be amended. A smaller angle leads to a greater stroke than a bigger angle α. Thus, in an embodiment, the angle of the swash plate may be used to amend the flow rate of the pump. A first section of the hydraulic fluid is in fluidal connection with the second end of the axial bore 612. Thus, a high pressure or low pressure section of the hydraulic fluid may be applied to the axial bore 612. The swash plate 630 is disposed on the opposite site of the barrel 610 of the high pressure or low pressure section of a hydraulic circuit 640. Around the circumference of the barrel 610, a second section of the hydraulic circuit 650 is arranged. Thus, the barrel 610 includes a further radial bore 618 that joins the axial bore 612. The opening of the radial bore 618 at a circumference of the barrel 610 is in fluidal connection with the second section 650 of the hydraulic circuit. A first valve 619, in particular a poppet valve, is arranged in the radial bore, for opening or closing a fluidal connection between the second portion of the hydraulic circuit 650 and the radial bore 618, and therefore with the axial bore 612, in which the piston 614 is moving. The axial bore include at its second end second valve 613, in particular a poppet valve, for regulating the fluidal connection between the first section 640 of the hydraulic circuit and the axial bore 612. The axial piston pump may include more than two pistons, in particular more than ten pistons.

In an embodiment, wherein each cylinder, i.e. each single pump or pump module comprising of the radial bore, the axial bore and the piston moving in the axial bore, has two actively controlled valves, one is regulating the flow between the high pressure part of the hydraulic circuit and the axial bore and the other one is controlling the flow between the low pressure part of the hydraulic circuit and the axial bore. Thus, a control device may individually activate and deactivate a piston. Thus, in a typical embodiment, by controlling the first and second valves 613, 619 the flow rate oft the pump may be amended and controlled. For pumping, the first valve 619 is opened during half a rotation and closed during the other half of the rotation, whereas the other valve 613 is closed the during first half of the rotation and opened during the second half of the rotation. In the example shown in Fig. 5, a rotation begins at the lower end of the figure, and the first half of the rotation ends at the upper end of the figure.

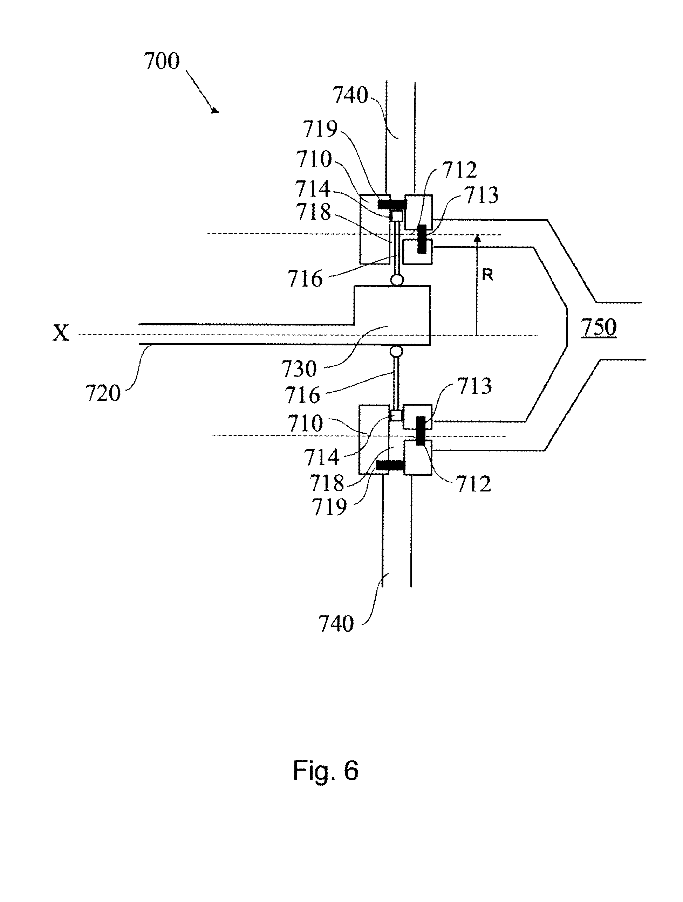

Fig. 6 shows a radial piston pump 700. The same features are designated with the same reference numbers as in Fig. 5 increased by 100. In contrast to the axial piston pump 600, the pistons 714 in the radial piston pump are arranged in radial direction in a radial bore 718 in a cylinder wall 710. The radial bore 718 has a first end in direction of the rotational axis X and a second end at an outer periphery of the cylinder wall 710.The cylinder wall 710 also includes an axial bore 712 between the radial bore 718 and an axial end at a side surface in axial direction. The connection rod 716 of the piston 714 is directed in axial direction towards the rotating axis X. As in the axial piston pump, each bore has a valve 713, 719 for regulating a fluidal connection between the radial bore 618 and the first and second section 640, 650 of the hydraulic circuit, respectively. The valves are disposed in a typical embodiment at the second end or axial end of the radial bore and axial bore, respectively. In a typical embodiment, each cylinder has two actively controlled poppet valves, one to each of the high or end low pressure part of the hydraulic circuit. The connecting rod 716 of the piston is connected at its end directed to the rotating axis X to a cam surface of a cam 730. In a further embodiment, the connecting rod 716 includes at its end directed to the rotating axis X a roll that is rolling on the cam surface. Thus, the friction between the connecting rod and the cam surface is reduced. The cam 730 is connected or formed in one with the rotating shaft 720. In a further embodiment, the cam may have a multi lobed cam surface, such that at each complete rotation of the shaft 720, each piston is moved back and forward several times. In a typical embodiment, the cam 730 and toe rotation shaft 720 form a rotor of the radial piston pump 700.

In other embodiments, the connections between the first and second sections 640, 650, 740, 750 and the bores of the piston pumps 600, 700 may be chosen arbitrarily. For example, the bores may have adjacent openings at the same surface of the barrel or the cylinder wall. Then, the bores are curved. Only the part of the bore, wherein the piston is moving has, in a typical embodiment, a straight form, such that the piston is moving with low friction.

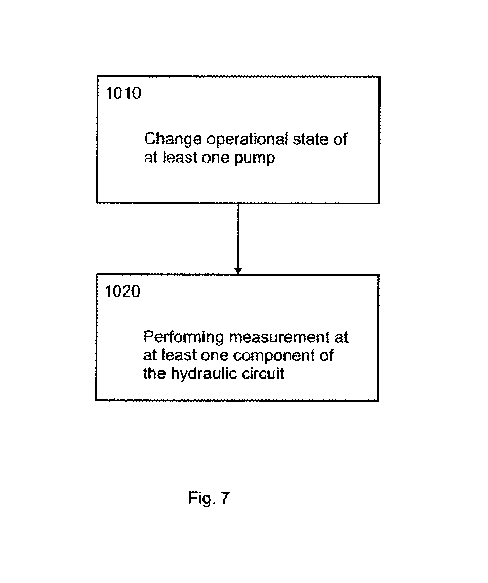

In a typical embodiment, which may be combined with other embodiments herein, valves 613, 619, 713, 719 are controlled electronically. For example, using the piston pumps shown in Fig. 6 or Fig. 7, the volume of the hydraulic fluid pumped from the low pressure side to the high pressure side of the hydraulic circuit depends on the number of activated pistons. As each piston of the axial or radial piston pumps may be controlled separately, the power of the pump 600, 700 can be accurately controlled.

In a further embodiment, which may be combined with other embodiments disclosed herein, the hydraulic motors are designed, such that they can activate or deactivate one or more pistons. Thus, in a hydraulic circuit having a controllable piston pump and a controllable hydraulic motor, the power transferred from rotational power to kinetic power of the hydraulic fluid and power transferred from kinetic power to rotational power in the hydraulic motor can be accurately controlled. In a further embodiment, the hydraulic machine, e.g. pumps or motors, may allow part stroke actuation. That means that a cylinder is active only for a part of the stroke. In a typical embodiment, also the controllable displacement pumps, for example the pumps shown in Figs. 2 to 7, may be configured to allow part stroke actuation.

For example, in a wind turbine, a pump with a continuously variable transmission-ratio allows the rotor to be operated at the optimal speed for the maximum power capture while the generator of the wind turbine is driven at an optimal, substantially constant speed for generating electric power. Further, the hydraulic conversion of rotational power to kinetic power of the hydraulic fluid and vice versa is shared among many pumping modules.

For example, in a system with fixed displacement or feedback on position of actuators, one can create a partly or overall volumetric balance to verify the condition of the components in the hydraulic circuit.

With a controllable displacement pump, for example, an axial or radial piston pump wherein each piston can be separately controlled, and motor, wherein each piston can be accurately controlled, one can calculate the flow production of the pump by the momentary pump speed, in particular the rotary speed of a shaft, and the displacement fraction, the flow consumption of the hydraulic motor can be calculated in the same way. Thus, the difference in flow may create a change in pressure level of the hydraulic system in accordance with hydraulic stiffness.

Typically, the volumetric behavior of each component in a hydraulic system, for example hydraulic circuit, may be taken into a balance of flow rates that is created for the system. If the sum of all the flow rates is not zero, the pressure change in the system may correspond to a predicted pressure change dependent on the hydraulic stiffness of the system.

For example, a fixed displacement pump, the system pressure and the pump speed may be measured for input signals for the volumetric balance. In a further embodiment, for a controlled displacement pump, the systems pressure, the pump speed, and the pump displacement fraction may be used as input signals for volumetric balance. In a typical embodiment, an axial or radial piston pump, according to Figs. 5 and 6, may be such a controlled displacement pump. In another embodiment, which may be combined with other embodiments disclosed herein, for a fixed displacement motor, the system pressure, and the motor speed may be used as input signals for the volumetric balance. For a controlled displacement motor, in another embodiment, the system pressure, the motor speed, and the pump displacement fraction may be used for input signals for the volumetric balance. In a typical embodiment, for a hydraulic cylinder, the system pressure and the actuator speed may be used for the input signals of the calculation of the volumetric balance. In a further embodiment, for an accumulator, the system pressure, and when the accumulator is of the piston type, the piston position may be used as input signals for calculating the volumetric balance.

For flow devices, the volumetric balance remains estimation by nature. For example, for valves, the pressure difference, and the valve position may be used as input signals for volumetric balance.

Typically, each of the components have its own map or function of internally leakage depending on system pressure, speed and eventually other factors like initial production tolerances, oil viscosity and/or maintenance conditions. For example, in a monitoring method it may be determined which volume flows if no leakage occurs, e.g. for detecting leakages.

In a typical embodiment, which may be combined with other embodiments herein, a monitoring device or a controller oversees the various calculated flow rates and detects in particular slow deterioration overtime due to wear, service change, an o-ring deterioration, and/or a sudden leakage (burst). Typically, the comparison to design values or volume flow rates in new and healthy condition is not the only way. For example, all cylinders of a pump or a hydraulic motor may be also compared to each other such that a control device may find out which of the cylinders or pistons is performing worse than other cylinders or pistons. In a typical embodiment, which may be combined with other embodiments disclosed herein, the pump or the hydraulic motor may be controlled such that the best cylinders or pistons are used most often.

For example, the components may be used in a wind turbine. For example, in displacement pumps, the mechanical excitation results in a hydraulic flow, which may be used, for example, in a wind turbine generator hydrostatic drive. This may be used for a control method which is build up on the measurement of flow. Typically, a fixed and/or a controllable displacement pump, a fixed and/or a controllable displacement motor, one or more accumulators may be used for a wind turbine main drive. For a pitch drive, for a yaw drive, or for an active flow control boost pump similar components like for the wind turbine main drive may be used. In a typical embodiment, also for the active flow control boost pump, for example the reservoir pump 290 in Fig. 2, a fixed displacement pump or a controlled displacement pump may be used.

In a typical embodiment, where a controlled displacement pump, like the axial piston pump shown in Fig. 6, or the radial piston pump in Fig. 7 are used for a pump in a hydraulic circuit, for example the hydraulic circuit shown in Fig. 2, and a control displacement motor similar to the controlled displacement pump is used as a hydraulic motor for converting kinetic power into a rotational power, the degrees of freedom in the hydraulic circuit may be used for providing good measurements of specific components in the hydraulic circuit. For example, in addition to just following the volumetric balance of a time, the controlled or displacement technology may be used to bring at least one component in an operating point that is favorable for detecting problems, for example where a leakage may occur, or where the wear of a specific component can be easily detected. For example, the pressure in a section of the hydraulic circuit may be raised or lowered. In an alternative embodiment, the speed of the rotor may be used as a degree of freedom. However, this may have a repercussion for the operation of a wind turbine as a whole. Typically such test are performed at appropriate operating conditions, for example low wind speeds, high wind speeds, and the like. In a typical embodiment, a displacement factor of a hydraulic motor or a controllable displacement pump may be used as a degree of freedom.

In a typical embodiment, where a hydraulic circuit is used in a wind turbine, for example the hydraulic circuit shown in Fig. 2, in a low wind speed situation, where the rotor speed of the wind rotor is low, a controller may be adapted to chose a high displacement fraction on order to get a regular delivery of a hydraulic fluid or oil from the hydraulic pump to the hydraulic motor.

Thus, in an embodiment, the displacement fraction of a pump or a motor is changed for modifying the pressure in a section of the hydraulic circuit.

In a typical embodiment, at a low wind speed situation, where the rotor speed is low, the controlled displacement may be controlled such that it deliberately creates pulses of high pressure, which may be detected easier by a measurement device. In a further embodiment, in order to perform such checks, in absence of low wind speed, in artificial low wind speed may be created by temporarily lowering the speed and therefore the torque of the wind rotor.

In a typical embodiment, the monitoring of the components may be performed without changing the rotational speed of the wind rotor, in the event that the wind rotor is not at its maximal speed.

In the case the wind turbine is working at a partial load, the displacement fraction of the controlled displacement pump and/or the controlled displacement motor may be freely chosen. Thus, the pressure in the high pressure line and/or the low pressure line may be arbitrarily changed to a desired pressure level. Thus, each component may be tested or monitored at a pressure lever where the wear of a leakage can be easily monitored. For example, a pulse respond of a component may be used to detect wear or a leakage.

For example, at the accumulator, a volume change of the gas in the reservoir may lead to a pressure change and from the pressure change, the actual volume of the hydraulic fluid in the accumulator may be determined.

Fig. 7 shows a flowchart of a method for monitoring at least one component in a hydraulic circuit. The hydraulic circuit includes at least one pump for converting rotational power into kinetic power of a hydraulic fluid in the hydraulic circuit. Typically, the at least one pump may be a controllable displacement pump which have at least two operational states. In a first step 1010, the operational state of the at least one pump is changed from a first operational state to a second operational state. Thus, the working point of the at least one component in the hydraulic circuit to be monitored is changed. In a typical embodiment, the operational point of the at least one component is chosen, where a defect or a leakage can be detected in the easiest way. In a further embodiment, the operational state change may provoke one or more pressure pulses in the hydraulic circuit. For example for changing the working point of the at least one component, the displacement fraction of the pump or the motor may be changed. The displacement fraction may be determined, in a typical embodiment, by the number of activated pistons of a motor or pump in a controlled displacement pump. In further embodiments, the working point of the at least one component may be changed using a part stroke (de-) activation, valve operation to shut off accumulators to get a stiffer system, and the like.

In an embodiment, which may be combined with other embodiments disclosed herein, a pump or a pump system may include two housings, or a multi-bank system, with multiple banks of cylinders separated in axial direction, e.g. in direction of the wind rotor shaft.

In a further step (step 1020) at least one measurement for monitoring the at least one component is performed. The measurement may start in a typical embodiment before the operational state of the at least one pump is changed, and may end a predetermined time after the change of the operational state. In a further embodiment, a message, a control action, an alarm and/or a warning may be triggered dependent on the measured value, in particular by comparing the measured value with a reference value.

Typically, the hydraulic pumps or motors with known volume flow to be measured are used in a hydraulic or hydrostatic drive train of a wind turbine. In particular, the hydraulic conditions are monitored for the hydrostatic drives, e.g. a hydraulic motor or pump. Embodiments may be used for a hydraulic drive train and/or a hydraulic pitch. Embodiments disclosed herein, may increase the safety and controllability for hydrostatic wind turbine generator drive trains.

In an embodiment, which may be combined with other embodiments, a method for monitoring at least one component to be monitored in a hydraulic circuit filled with a working fluid is provided. The hydraulic circuit includes at least one pump for circulating the working fluid. The method includes:changing an operational state of at least one first component in the hydraulic circuit so that a working point of the at least one component to be monitored changes to a predetermined working point; performing at least one measurement for monitoring the at least one component to be monitored.

In a further embodiment, the method may further include: triggering a message or a control action dependent on the measured value.

In a typical embodiment, the at least one first component may be a hydraulic pump, a hydraulic motor, a filter, a cooler, that may be varied in their operational state to create a monitoring possibility. Typically, the operational state may include the number of pistons activated in a pump or a motor, a part stroke (de-) activation of a piston in a pump or a hydraulic motor, a shut on or off of an accumulator, e.g. by closing a valve, or the like. For example, if the cooler is a first component, the operational state may be the power provided to the cooler. In case the cooler includes a fan, the power, in particular the electric power, provided to the fan may depend on the operational state. Typically, if the operational state of the cooler is changed, the viscosity of the hydraulic fluid, for example oil, may change. Thus, the working point of the component to be monitored may change.

In a typical embodiment, which may be combined with other embodiments disclosed herein, the at least one first component has at least two operational states, wherein the method further includes: changing the operational state of the at least one first component from a first operational state to a second operational state.

In another embodiment, the operational state is continuously changed from a first operational state to a second operational state.

In a typical embodiment, the predetermined working point is chosen to facilitate the monitoring, in particular the monitoring of the wear, efficiency or the leakage of the component to be monitored. For example, at the predetermined working point the hydraulic fluid may have a predetermined fluid flow, a predetermined pressure, and/or a predetermined temperature, in particular at the component to be monitored.

In a typical embodiment, the at least one first component and the at least one second component may be the same component.

In a typical embodiment, the working fluid is a hydraulic fluid, for example including synthetic compounds, mineral oil, water, and water-based mixtures.

In a typical embodiment, the at least one measurement may start before the change of the operational state during all the time. In a further embodiment, the at least one component to be monitored may be hydraulic accumulator, a piston of the at least one pump, a pump module of the least one pump, a valve, a hydraulic motor, and the like.

In a further embodiment, the at least one pump is a first component, wherein the at least one pump has a pump rotor for driving the at least one pump and at least two operational states. In a typical embodiment, the rotational speed of the pump rotor remains substantially constant in step when changing the operational state of the pump.

In another embodiment, which may be combined with other embodiments disclosed herein, an embodiment further includes changing an operational state of the at least one first component from the second operational state to a third operational state or the first operational state.

In a typical embodiment, which may be combined with other embodiments disclosed herein, the at least one component to be monitored has a first working point at the first operational state of the at least one first component and a second working point at the second operational state of the at least one first component.

In a further embodiment, the different operational states of the at least one pump differs from each other by a different working fluid delivery volume at a same pump rotor speed.

The fluid delivery volume of the at least one first component may be in the first operational state, in a typical embodiment, lower than in the second operational state.

In a typical embodiment, which may be combined with other embodiments disclosed herein, the at least one pump has at least two pump modules for pumping the working fluid, wherein the number of activated pump modules in an operational state is different to the number of activated pump modules in another operational state.

In a further embodiment, the at least one pump has at least two pump modules for pumping the working fluid, wherein at least one activated pump module activated in an operational state is deactivated in another operational state.

In a typical embodiment, the pump module may be a piston or a group of at least two pistons. In a typical embodiment, which may be combined with other embodiments disclosed herein, a pump module is activated, when the pump module takes part at the working fluid delivery of the pump. In another embodiment, the constellation of activated pump modules in a first operational state is different from the constellation in a second operational state, wherein the number of activated pump modules is the same in both operational states. For example at least one activated pump module activated in an operational state is deactivated in another operational state, wherein the number of activated pump modules is or are the same. In a further embodiment, a part stroke of a piston may be activated or deactivated.

In another embodiment, the hydraulic circuit includes at least one hydraulic motor for driving a rotor shaft, wherein the at least one hydraulic motor is a first component and has at least two operational states, wherein the method further includes: changing an operational state of the at least one hydraulic motor from a first operational state to a second operational state.

According to an embodiment, which may be combined with other embodiments disclosed herein, the at least one hydraulic motor has at least two motor modules for driving the rotor shaft, wherein the number of activated motor modules in an operational state is different to the number of activated motor modules in another operational state.

In a further embodiment, the at least one hydraulic motor has at least two motor modules for driving the rotor shaft, wherein at least one activated motor module activated in an operational state is deactivated in another operational state.

In a typical embodiment, the motor module may be a piston or a group of at least two pistons. In a typical embodiment, which may be combined with other embodiments disclosed herein, a motor module is activated, when the motor module takes part at the driving of the rotor shaft. In another embodiment, the constellation of activated motor modules in a first operational state is different from the constellation in a second operational state, wherein the number of activated motor modules is the same in both operational states. For example at least one activated motor module activated in an operational state is deactivated in another operational state, wherein the number of activated motor modules is or are the same.

Typically, a pressure, a temperature, a flow of the working or hydraulic fluid and/or the viscosity of the working fluid in at least one part of the hydraulic circuit is changed to a predetermined level, typically above or below a predetermined level when changing an operational state of the at least one first component, in particular when changing the pump from a first operational state to a second operational state. Typically the predetermined level of the pressure is adapted to be beneficial for the monitoring of the at least one component.

In a further embodiment, the at least one component to be monitored is a motor module, a pump module, a valve, a working fluid reservoir, a working fluid accumulator, a filter, a cooler or the like.

In a typical embodiment, the measured value of the at least one measurement is selected from the group consisting of a working fluid delivery volume, a working fluid flow, a pressure and/or a temperature.

In a typical embodiment, which may be combined with other embodiments disclosed herein, the flow rate of the working or hydraulic fluid may be increased, for example by changing a displacement factor of a pump to a high displacement factor or a full stroke displacement, or by accelerating the rotor speed of the pump rotor. Thus, the flow characteristics of the filter may be determined by measuring the flow of the working fluid. For example, a clogged filter may be detected.

For determining the flow characteristics of the filter also the viscosity of the working or hydraulic fluid may be changed. For example, with a low viscosity of the working fluid the flow characteristics and thus a clogging of the filter may be easier detected. The power of the cooler may be increased for reducing the viscosity. Thus, a first component of the hydraulic circuit may be the cooler and the component to be monitored may be the filter, whereas a flow measurement is used for monitoring the filter.

In another embodiment, which may be combined with other embodiments disclosed herein, the component to be monitored may be the cooler. For example, the flow rate of the working fluid may be decreased to a defined level, for example by changing a displacement factor of a pump to a low displacement factor or to a partial stroke displacement, or by decelerating the rotor speed of the pump rotor. Thus, the pump may be a first component. Then, the temperature differences within the hydraulic circuit may be high. The temperature difference may be measured, and a control device may determine if the cooler is dirty or not. In a further embodiment, which may be combined with other embodiments, the power of the cooler is increased to increase the temperature differences within the hydraulic circuit. Again, it may be easily determined via temperature measurements, if the cooler, which is then the component to be monitored, is dirty.

In a further embodiment, which may be combined with other embodiments disclosed herein, the component to be monitored may be the pump, in particular a piston in the pump. For example a leaking piston in the pump may be detected by a providing a full displacement on that piston and a low or no displacement on the other pistons of the pump. Thus, about a (volume) flow measurement of the hydraulic fluid or working fluid, a leakage of the piston may be detected. In a further embodiment, which may be combined with other embodiments, the pressure of the hydraulic circuit may be increased, such that more working fluid is leaking, in particular at the piston that is activated. In a further embodiment, the rotor speed of the pump rotor may be increase to increase the leakage. Thus, the leakage of a piston may be easier detected. Hence, the working point of the pump is changed to optimize the monitoring of a piston of the pump.

In a typical embodiment, which may be combined with other embodiments disclosed herein, the component to be monitored may be a pump, in particular a valve of the pump. For example the speed of a valve may be monitored, such that if the valve response is too slow, a control message or a control action may be triggered. For example the rotor speed of the pump rotor may be accelerated, such that the valve response may be measured. Thus, the first component and the component to be monitored is the pump. In a further embodiment, the pressure of the working fluid may be lowered, such that only small forces of the working fluid force the valve to open. Hence, the working point of the pump is changed to optimize the monitoring of the valve response of a valve in the pump.

Another embodiment concerns a monitoring device for monitoring at least one component to be monitored in a hydraulic circuit being filled with a working fluid is provided. The hydraulic circuit includes at least one pump for circulating the working fluid. The monitoring device is adapted to be connected to the at least one first component for changing the operational state of at least one first component in the hydraulic circuit, so that a working point of the at least one component to be monitored changes to a predetermined working point. Further, the monitoring device is adapted to be connected to at least one measurement device for performing a measurement for monitoring the at least one component to be monitored.

In a typical embodiment, the at least one first component has at least two operational states, wherein the monitoring device is further adapted to change the operational state of the at least one first component from a first operational state to a second operational state.

In a typical embodiment, the monitoring device is adapted to keep the rotational speed of pump rotor substantially constant when changing the operational state from the first operational state to the second operational state.

According to another embodiment, the at least one component to be monitored has a first working point at the first operational state of the at least one first component and a second working point at the second operational state of the at least one first component.

In a typical embodiment, which may be combined with other embodiments herein, the at least one pump is a first component, wherein the monitoring device is adapted to control a working fluid delivery volume of the at least one pump, wherein in different operational states of the at least one pump the working fluid delivery volume is different at a same pump rotor speed.

In a further embodiment, the at least one pump has at least two pump modules for pumping the working fluid, wherein monitoring device is adapted to at least activate or partly activate a first number of pump modules in an operational state and a second number of activated or partly activated pump modules in another operational state different to the first number. In a typical embodiment, a pump module is partly activated if only a part stroke of a piston of a pump module is activated.

Another embodiment, which may be combined with other embodiments disclosed herein, may be directed to a fluid turbine comprising at least one fluid rotor, wherein the fluid rotor is adapted to convert kinetic power of a fluid into a rotation, the fluid turbine further comprising a hydraulic circuit filled with a working fluid, wherein the hydraulic circuit includes at least one pump, wherein the at least one pump has a pump rotor, wherein the fluid rotor is in operative connection with the pump rotor of the at least one pump for a rotational transmission, the hydraulic circuit further comprising at least one hydraulic motor for driving at least one generator shaft of at least one generator for converting a rotation into electrical power, wherein the fluid turbine further includes a monitoring device for at least one component to be monitored in the hydraulic circuit, wherein the monitoring device is connected to the at least one pump for changing the operational state of at least one first component in the hydraulic circuit, so that a working point of the at least one component to be monitored changes to a predetermined working point, and a measurement device connected to the monitoring device for performing a measurement for monitoring the at least one component to be monitored.

According to a typical embodiment, which may be combined with another embodiment disclosed herein, the fluid turbine is a wind turbine.

This written description uses examples, including the preferred mode, to enable any person skilled in the art to make and use the described subject-matter. While various specific embodiments have been disclosed in the foregoing, those skilled in the art will recognize that the spirit and scope of the claims allow for equally effective modifications. Especially, mutually non-exclusive features of the embodiments described above may be combined with each other. The patentable scope is defined by the claims, and may include such modifications and other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A method for monitoring at least one component to be monitored in a hydraulic circuit filled with a working fluid, the hydraulic circuit comprises at least one pump for circulating the working fluid, wherein the method comprises:
   changing an operational state of at least one first component in the hydraulic circuit such that a working point of the at least one component to be monitored changes to a predetermined working point;
   performing at least one measurement for monitoring the at least one component to be monitored.
2. The method according to clause 1, wherein the at least one first component has at least two operational states, wherein the method further comprises changing the operational state of the at least one first component from a first operational state to a second operational state.
3. The method according to any preceding clause, wherein the at least one component to be monitored has a first working point at the first operational state of the at least one first component and a second working point at the second operational state of the at least one first component.
4. The method according to any preceding clause, wherein the method further comprises triggering a message or a control action dependent on a measured value.
5. The method according to any preceding clause, wherein the at least one pump is a first component, wherein the at least one pump has pump rotor for driving the at least one pump, and at least two operational states, wherein the different operational states of the at least one pump differs from each other by a different working fluid delivery volume at a same pump rotor speed.
6. The method according to any preceding clause, wherein the at least one pump has at least two pump modules for pumping the working fluid, wherein the number of activated pump modules in an operational state is different to the number of activated pump modules in another operational state.
7. The method according to any preceding clause, wherein the at least one pump has at least two pump modules for pumping the working fluid, wherein at least one activated pump module activated in an operational state is deactivated in another operational state.
8. The method according to any preceding clause, wherein the hydraulic circuit comprises at least one hydraulic motor for driving a rotor shaft, wherein the at least one hydraulic motor is a first component and has at least two operational states, wherein the method further comprises:
   changing an operational state of the at least one hydraulic motor from a first operational state to a second operational state.
9. The method according to any preceding clause, wherein the at least one hydraulic motor has at least two motor modules for driving the rotor shaft, wherein the number of activated motor modules in an operational state is different to the number of activated motor modules in another operational state.
10. The method according to any preceding clause, wherein the at least one hydraulic motor has at least two motor modules for driving the rotor shaft, wherein at least one activated motor module activated in an operational state is deactivated in another operational state.
11. The method according to any preceding clause, wherein a pressure, a temperature, a viscosity or a flow of the working fluid in at least one part of the hydraulic circuit is changed to a predetermined level when changing an operational state of the at least one first component.
12. The method according to any preceding clause, wherein the at least one component to be monitored is selected of the group consisting of a motor module, a pump module, a valve, a working fluid reservoir, a working fluid accumulator, a filter, a cooler.
13. The method according to any preceding clause, wherein a measured value of the at least one measurement is selected from the group consisting of a working fluid delivery volume, a working fluid flow, a pressure and a temperature.
14. A monitoring device for monitoring at least one component to be monitored in a hydraulic circuit being filled with a working fluid, wherein the hydraulic circuit comprises at least one pump for circulating the working fluid, wherein the monitoring device is adapted to be connected to the at least one first component for changing the operational state of at least one first component in the hydraulic circuit, so that a working point of the at least one component to be monitored changes to a predetermined working point, and
   the monitoring device is adapted to be connected to at least one measurement device for performing a measurement for monitoring the at least one component to be monitored.
15. The monitoring device according to any preceding clause, wherein the at least one first component has at least two operational states, wherein the monitoring device is further adapted to change the operational state of the at least one first component from a first operational state to a second operational state.
16. The monitoring device according to any preceding clause, wherein the at least one component to be monitored has a first working point at the first operational state of the at least one first component and a second working point at the second operational state of the at least one first component.
17. The monitoring device according to any preceding clause, wherein the at least one first component is the at least one pump, wherein the monitoring device is adapted to control a working fluid delivery volume of the at least one pump, wherein in different operational states of the at least one pump the working fluid delivery volume is different at a same pump rotor speed.
18. The monitoring device according to any preceding clause, wherein the at least one pump has at least two pump modules for pumping the working fluid, wherein monitoring device is adapted to at least activate or partly activate a first number of pump modules in an operational state and a second number of activated or partly activated pump modules in another operational state different to the first number.
19. A fluid turbine comprising at least one fluid rotor, wherein the fluid rotor is adapted to convert kinetic power of a fluid into a rotation, the fluid turbine further comprising a hydraulic circuit filled with a working fluid, wherein the hydraulic circuit comprises at least one pump, wherein the at least one pump has a pump rotor, wherein the fluid rotor is in operative connection with the pump rotor of the at least one pump for a rotational transmission,
   the hydraulic circuit further comprising at least one hydraulic motor for driving at least one generator shaft of at least one generator for converting a rotation into electrical power,
   wherein the fluid turbine further comprises a monitoring device for at least one component to be monitored in the hydraulic circuit, wherein the monitoring device is connected to at least one first component of the hydraulic circuit for changing the operational state of the at least one first component so that a working point of the at least one component to be monitored changes to a predetermined working point, and
   a measurement device connected to the monitoring device for performing a measurement for monitoring the at least one component to be monitored.
20. The fluid turbine according to any preceding clause, wherein the fluid turbine is a wind turbine.

## Claims

1. A method for monitoring at least one component to be monitored in a hydraulic circuit (200) filled with a working fluid, the hydraulic circuit comprises at least one pump (210, 410, 420, 600, 700) for circulating the working fluid, wherein the method comprises:
changing an operational state of at least one first component (210, 215, 220, 230, 237, 239, 250, 260, 290, 300, 410, 420, 220, 510, 520, 600, 700) in the hydraulic circuit such that a working point of the at least one component to be monitored changes to a predetermined working point;
performing at least one measurement for monitoring the at least one component to be monitored (210, 215, 220, 230, 237, 239, 250, 260, 290, 300, 410, 420, 220, 510, 520, 600, 700).

2. The method according to claim 1, wherein the at least one first component (210) has at least two operational states, wherein the method further comprises changing the operational state of the at least one first component from a first operational state to a second operational state.

3. The method according to claim 1 or 2, wherein the at least one component to be monitored has a first working point at the first operational state of the at least one first component and a second working point at the second operational state of the at least one first component.

4. The method according to one of the claims 1 to 3, wherein the at least one pump (210) is a first component, wherein the at least one pump has a pump rotor for driving the at least one pump, and at least two operational states, wherein the different operational states of the at least one pump differs from each other by a different working fluid delivery volume at a same pump rotor speed.

5. The method according to any preceding claim, wherein the at least one pump (210) has at least two pump modules (612, 614, 714, 718) for pumping the working fluid, wherein the number of activated pump modules in an operational state is different to the number of activated pump modules in another operational state, and/or wherein the at least one pump has at least two pump modules for pumping the working fluid, wherein at least one activated pump module activated in an operational state is deactivated in another operational state.

6. The method according to one of the claims 1 to 5, wherein the hydraulic circuit comprises at least one hydraulic motor (220, 510, 520) for driving a rotor shaft (235), wherein the at least one hydraulic motor is a first component and has at least two operational states, wherein the method further comprises: changing an operational state of the at least one hydraulic motor from a first operational state to a second operational state.

7. The method according to claim 6, wherein the at least one hydraulic motor (220) has at least two motor modules for driving the rotor shaft (235), wherein the number of activated motor modules in an operational state is different to the number of activated motor modules in another operational state, and/or the at least one hydraulic motor has at least two motor modules for driving the rotor shaft, wherein at least one activated motor module activated in an operational state is deactivated in another operational state.

8. The method according to one of the claims 1 to 7, wherein the measured value from the measurement device is selected from the group a working fluid delivery volume, working fluid flow, a pressure and a temperature.

9. The method according to one of the claims 1 to 8, wherein a pressure, a temperature, a viscosity and/or a flow of the working fluid in at least one part of the hydraulic circuit is changed to a predetermined level when changing an operational state of the at least one first component.

10. A fluid turbine (100), in particular a wind turbine, comprising at least one fluid rotor (160, 415, 425), wherein the fluid rotor is adapted to convert kinetic power of a fluid into a rotation, the fluid turbine further comprising a hydraulic circuit (200) filled with a working fluid, wherein the hydraulic circuit comprises at least one pump (210, 410, 420), wherein the at least one pump has a pump rotor (610, 620, 720, 730), wherein the fluid rotor is in operative connection with the pump rotor of the at least one pump for a rotational transmission,
the hydraulic circuit further comprising at least one hydraulic motor (220, 510, 520) for driving at least one generator shaft (235) of at least one generator (240, 515, 525) for converting a rotation into electrical power,
wherein the fluid turbine further comprises a monitoring device (310) for at least one component to be monitored (210, 215, 220, 230, 250, 260, 290, 300) in the hydraulic circuit, wherein the monitoring device is connected to at least one first component of the hydraulic circuit for changing the operational state of the at least one pump, so that a working point of the at least one component to be monitored changes to a predetermined working point, and
a measurement device (270) connected to the monitoring device for performing a measurement for monitoring the at least one component to be monitored.
